# FASCICULE DE BREVET EUROPEEN

(11) **EP 3 784 720 B1**
(45) Date de publication et mention de la délivrance du brevet: **10.01.2024**
(21) Numéro de dépôt: 19729580.1
(22) Date de dépôt: 26.04.2019
(51) Int. Cl.: C08J 7/12, C08J 11/10

(54) **COMPOSITION POUR THERMOPLASTIQUE COMPRENANT UN COMPOSE SENSIBILISANT A LA DEPOLYMERISATION PAR MICRO-ONDES**
THERMOPLASTISCHE ZUSAMMENSETZUNG MIT EINER MIKROWELLENDEPOLYMERISATIONSSENSIBILISIERUNGSVERBINDUNG
THERMOPLASTIC COMPOSITION COMPRISING A MICROWAVE-DEPOLYMERISATION SENSITISING COMPOUND

(30) Priorité: 27.04.2018 FR 1853716
(43) Date de publication de la demande: 03.03.2021
(73) Titulaire: ARKEMA FRANCE, 92700 Colombes (FR)
(72) Inventeur: DUBOIS, Jean-Luc, 69390 MILLERY (FR)
(74) Mandataire: Arkema Patent
(86) Numéro de dépôt international: PCT/FR2019/050992
(87) Numéro de publication internationale: WO 2019/207265

(56) Documents cités:
- WO-A1-02/072333
- WO-A1-2010/070165
- US-A- 5 338 611
- US-A1- 2009 286 013
- DATABASE WPI Week 201643 2016 Thomson Scientific, London, GB; AN 2016-38843P XP002787489, & JP 2016 112835 A (ADCHEMCO CORP) 23 juin 2016 (2016-06-23)
- DATABASE WPI Week 201466 2014 Thomson Scientific, London, GB; AN 2014-R68641 XP002787491, & JP 2014 180778 A (AISHIN KAKO KK) 29 septembre 2014 (2014-09-29)
- M. E. GRIGORE: "Methods of recycling, Properties nd Applications of Recycled Thermoplastic Polymers", RECYCLING, vol. 2, no. 24, 28 novembre 2017 (2017-11-28), pages 1-11, XP002787490,

## Description

La présente invention se rapporte de manière générale à un procédé de recyclage d'un article comprenant une matrice thermoplastique formée à partir d'une composition thermoplastique comprenant un composé sensibilisant à la dépolymérisation par rayonnements micro-ondes. L'invention trouve des applications dans divers secteurs industriels tels que le bâtiment, les transports, l'électronique, dans la fabrication de panneaux photovoltaïques, les luminaires et enseignes, les sanitaires.

### [Art Antérieur]

En 2017, des milliers de tonnes de thermoplastiques ont été mondialement produites. Ainsi, la production et le recyclage des thermoplastiques apparaissent aisément comme des enjeux majeurs d'un point de vue environnemental et économique. Parmi les méthodes classiques de recyclage des matières plastiques, la pyrolyse thermique et le recyclage mécanique sont les plus employées.

La pyrolyse thermique de thermoplastiques consiste à placer l'objet en thermoplastique à traiter dans une chambre adéquate puis à chauffer la chambre afin que la chaleur soit transférée à l'objet en thermoplastique. Elle permet de traiter les déchets thermoplastiques et conduit généralement à des résidus charbonneux, de l'huile et des gaz qui ne peuvent être réutilisés pour la production de matrice en polymère thermoplastique. De plus, la pyrolyse thermique est difficilement adaptable pour une utilisation à grande échelle du fait des problèmes de stockage des déchets et des coûts associés, ou encore du fait de limitations de transfert de chaleur (vers le polymère à traiter). En outre, la pyrolyse thermique implique une installation particulière avec un dispositif de chauffage approprié dont la gestion peut être périlleuse compte tenu des risques d'incendies notamment. A cela s'ajoute que ce type d'installation connaît des problèmes d'encrassage qui sont amplifiés lors d'une utilisation à grande échelle, ce qui implique un coût d'entretien important.

Le recyclage mécanique consiste à trier, laver et broyer les déchets pour obtenir des paillettes qui sont à leur tour lavées, rincées, essorées, séchées et tamisées. Cependant, le broyat obtenu n'est généralement pas de bonne qualité et est rarement réutilisé seul en plasturgie. De plus, cette méthode est longue et difficile à mettre en oeuvre notamment lorsqu'il s'agit de films plastiques qui sont légers et délicats à récupérer. D'autre part, les déchets à base de matières plastiques se composent généralement de plusieurs types de matériaux associés. Ces déchets peuvent contenir, outre des thermoplastiques, d'autres types de plastiques présentant des propriétés différentes ou des fibres par exemple. Les étapes de tri et de préparation des déchets sont alors grandement complexifiées. De plus, la récupération de matériaux suffisamment purs en sortie du centre de tri pour être réutilisés, est difficile et complexe.

De manière générale, les mélanges de plastiques sont difficilement recyclables et les produits obtenus après traitement thermique ou mécanique sont généralement destinés à des applications peu exigeantes en matière de performance.

En outre, ces méthodes de recyclage visent à traiter des déchets plastiques mais ne permettent pas de dépolymériser un polymère, c'est-à-dire décomposer un polymère. La dépolymérisation ou décomposition peut conduire notamment à recouvrer les monomères de base du polymère traité.

On connaît toutefois la dépolymérisation utilisant un lit de plomb fondu, notamment dans le cas du poly(méthacrylate de méthyle) (PMMA). Dans cette méthode, les thermoplastiques sont broyés et sont décomposés dans un lit de plomb fondu porté à une température supérieure à 400°C. Un tel procédé présente cependant plusieurs inconvénients. En effet, le plomb présente une forte toxicité pour l'Homme et pour l'environnement, son utilisation est donc fortement déconseillée. De plus, le réacteur dans lequel le bain est disposé connaît des problèmes d'encrassage qui touchent également le lit de plomb en lui-même. Le nettoyage d'un tel dispositif est fastidieux et génère des sous-produits toxiques contenant du plomb. Le traitement des déchets pollués au plomb est donc à prévoir. De plus, le redémarrage du système de chauffage et la refonte du plomb sont des processus énergivores et coûteux.

Le document WO2010/070165 décrit un procédé d'obtention de mousse polymère et de recyclage de mousses thermostables. Ces mousses sont à partir du PE ou EVA ou leurs mélanges.

Le document US 5,338,611 décrit la fabrication d'articles en matériaux volumineux par soudage. Pour cela, une bande d'un matériau thermoplastique miscible contenant un composé sensible aux micro-ondes est interposé dans la zone à souder entre les deux substrats à souder.

Le document US 2009/286013 décrit un procédé et un matériau polymère qui facilite le chauffage rapide et volumétrique du polymère en utilisant de l'énergie micro-ondes pour des assemblages de produits.

Le document WO02/072333 décrit une composition de polymère durcissable à l'humidité ou aux micro-ondes, qui est coextrudée, calandrée ou co-moulée avec une polymère thermoplastique.

Le document JP2016112835 décrit une composition thermoplastique contenant des ferrites pour chauffer un objet dans une moule à une certaine température.

Le document JP2014180778 décrit un procédé de soudage uniforme de deux polymères. Un matériau de soudure, composé du même résiné thermoplastique que le matériau de base à souder, comprend des particules générant de la chaleur sous micro-ondes.

La publication de M. E. Grigore dans le journal RECYCLING, 2017, Vol. 2, N° 24, pages 1-11 décrit le recyclage de polymères thermoplastiques, en particulier le recyclage mécanique consistant à couper/broyer puis laver les polymères en granulés, flocons ou pastilles de qualité appropriée pour être à nouveau fondu et former un nouveau produit.

Ainsi, il apparait que les techniques existantes ne permettent pas un recyclage efficace des produits thermoplastiques.

### [Problème technique]

L'invention vise à supprimer, ou du moins atténuer, tout ou partie des inconvénients de l'art antérieur précités.

L'invention apporte ainsi une solution simple et efficace pour valoriser les déchets thermoplastiques et/ou récupérer des monomères en vue de leur réutilisation dans la fabrication d'articles thermoplastiques. L'invention permet également une dépolymérisation spécifique de polymère, tout en permettant une économie d'énergie. L'invention s'intègre ainsi dans un contexte de développement durable.

### [Brève description de l'invention]

A cet effet, un premier aspect de l'invention propose un procédé de recyclage d'un article comprenant une matrice thermoplastique formée à partir d'une composition thermoplastique comprenant au moins un composé sensibilisant à la dépolymérisation par micro-onde, ladite composition thermoplastique comprenant au moins un précurseur de polymère thermoplastique, et au moins un composé sensibilisant à la dépolymérisation par micro-ondes. Ce procédé est défini en revendication 1.

Grâce à la composition thermoplastique, il est possible de préparer des articles comportant une matrice polymère thermoplastique, formée à partir du précurseur de polymère contenu dans la composition thermoplastique, dont le traitement et le recyclage sont facilités. Notamment, des articles thermoplastiques réalisés à base de la composition contenant le sensibilisant sont plus réceptifs aux rayonnements micro-ondes et se recyclent plus aisément.

Le précurseur de polymère thermoplastique forme la matrice polymère thermoplastique ou une partie de la matrice polymère thermoplastique après une polymérisation. Le précurseur de polymère thermoplastique contient par exemple au moins une monomère polymérisable, qui après polymérisation est compris dans la composition thermoplastique.

**Selon d'autres caractéristiques optionnelles de la composition :**
- l'au moins un précurseur de polymère thermoplastique est sélectionné parmi des composés comportant des groupements acrylates, carbonates, esters, styrène, sulfone, acétate de vinyle, ou leur mélange.
- l'au moins un précurseur de polymère thermoplastique est une composition liquide (méth)acrylique comprenant un monomère (méth)acrylique ou un mélange de monomères (méth)acryliques, un polymère (méth)acrylique et au moins un amorceur radicalaire.
- le composé sensibilisant à la dépolymérisation présente un facteur de perte diélectrique supérieur ou égal à 0,1 à une fréquence comprise entre 900 MHz et 2500 MHz et à 25°C et de préférence supérieur ou égal à 0,1 à une fréquence de 2,45 GHz et à 25°C. Cela permet au composé sensibilisant d'absorber l'énergie micro-ondes plus rapidement que les polymères thermoplastiques, puis de dissiper cette énergie sous forme de chaleur entraînant ainsi un échauffement plus rapide desdits polymères.
- le composé sensibilisant à la dépolymérisation présente une constante diélectrique supérieure ou égale à 5 à une fréquence comprise entre 900 MHz et 2500 MHz et à 25°C et de préférence supérieur ou égale à 5 à une fréquence de 2,45 GHz et à 25°C. Cela permet un échauffement rapide du matériau.
- le composé sensibilisant à la dépolymérisation présente une tangente de l'angle de pertes supérieure ou égale à 10⁻⁴ à une fréquence comprise entre 900 MHz et 2500 MHz et à 25°C et de préférence supérieur ou égale à 10⁻⁴ à une fréquence de 2,45 GHz et à 25°C.
- le composé sensibilisant à la dépolymérisation est présent à une teneur allant de 0,1 % à 50 % en poids de la composition thermoplastique.
- le composé sensibilisant à la dépolymérisation est sélectionné parmi : SiC, TiO₂, ZrO₂, BaTiO₃, SrTiO₃, MgTiO₃, CaTiO₃, LaAlOs, Ferrites, Basalte, Marbre et leurs mélanges. Le composé sensibilisant à la dépolymérisation peut aussi être sélectionné parmi : Ferrites, Titanate de Baryum, Titanate de Strontium, Titanate de Calcium, Titanate de Magnésium et leurs mélanges. De tels composés sensibilisants permettent un échauffement plus rapide de la matrice polymérique formée à partir de l'au moins un précurseur de polymère thermoplastique
- le composé sensibilisant à la dépolymérisation est présent seulement dans certains endroits dans la composition thermoplastique après polymérisation: le composé sensibilisant à la dépolymérisation est présent dans moins de 90% de volumes la composition thermoplastique
- le composé sensibilisant à la dépolymérisation est présent dans la composition thermoplastique après polymérisation dans au moins de 10% de volumes la composition thermoplastique.

Dans un second aspect, il est décrit un procédé de recyclage d'un article comprenant une matrice thermoplastique formée à partir d'une composition thermoplastique comprenant au moins un composé sensibilisant à la dépolymérisation par micro-onde, l'article est fait par un procédé de fabrication d'un article comprenant une étape de préparation d'une composition thermoplastique , et une étape de formation dudit article à partir de ladite composition. Ce procédé de fabrication, non revendiqué, peut également comprendre une étape d'imprégnation d'un renfort avec ladite composition. Un tel procédé permet aux articles thermoplastiques réalisés à partir de la composition thermoplastique d'être plus réceptifs aux rayonnements micro-ondes et d'être recyclés plus aisément.

Selon une caractéristique optionnelle du procédé, l'étape de formation est sélectionnée dans le groupe constitué par : l'extrusion, la co-extrusion, le thermoformage, le moulage par injection, le moulage par compression, le film d'extrusion, le moulage par soufflage, la multi-injection ou la formation de plaque par coulage. Ainsi, dès sa conception, l'article formé à partir de la composition thermoplastique présente l'avantage d'être recyclable rapidement et donc avec un coût énergétique réduit.

Dans un troisième aspect, il est également décrit (mais non revendiqué) un procédé de recyclage d'un article comprenant une matrice thermoplastique formée à partir d'une composition thermoplastique comprenant au moins un composé sensibilisant à la dépolymérisation par micro-onde, l'article comportant une matrice thermoplastique formée à partir de la composition thermoplastique définie dans le premier aspect. Ainsi, cet article comporte plus particulièrement une matrice thermoplastique formée à partir d'au moins un précurseur de polymère thermoplastique. La matrice thermoplastique est associée à au moins un composé sensibilisant à la dépolymérisation par micro-ondes. Un tel article permet par exemple de favoriser le recyclage et donc de diminuer les coûts et l'impact environnemental.

L'invention a donc pour objet un procédé de recyclage d'un article comprenant une matrice thermoplastique formée à partir d'une composition thermoplastique comprenant au moins un composé sensibilisant à la dépolymérisation par micro-onde, ledit procédé comprenant les étapes suivantes :
- le placement de l'article dans un réacteur, et
- l'application, à l'article placé dans le réacteur, d'un rayonnement micro-onde à une fréquence comprise entre 10 MHz et 5,8 GHz, de manière à initier une dépolymérisation par absorption de micro-ondes par ledit composé sensibilisant aux micro-ondes, et une conversion d'une partie au moins de l'article en au moins un monomère de base de ladite matrice thermoplastique.

**Selon d'autres caractéristiques optionnelles de l'article :**
- la matrice thermoplastique selon l'invention est une matrice à base de : homo- et copolymères acryliques, poly(méth)acrylates d'alkyles, poly(méthacrylate de méthyle), polycarbonates, polyesters, polystyrène, polyétherimide, polysulfone, poly(sulfure de phénylène), poly(acétate de vinyle), ou d'un mélange de deux ou plusieurs de ces polymères. Ces polymères sont particulièrement adaptés aux procédés industriels de traitement et de recyclage et permettent une certaine malléabilité facilitant ainsi leur mise en forme par application de chaleur et de pression. Les thermoplastiques retrouvent leur rigidité initiale après refroidissement, sans pour autant que la matière soit thermiquement dégradée.
- la matrice thermoplastique comprend un polymère thermoplastique présentant un facteur de perte diélectrique inférieur ou égal à 0,1, tel que mesuré à 2450 MHz et 25°C, de façon plus préférée inférieur ou égal à 0,05, et de façon encore plus préférée inférieur ou égal à 0,02. Avec de telles valeurs de facteur de perte diélectrique, le polymère thermoplastique et plus largement la matrice thermoplastique, en absence de composé sensibilisant, absorbe peu les microondes. Ainsi, lorsqu'elle est additivée d'au moins un composé sensibilisant à la dépolymérisation par micro-ondes, elle peut alors être dépolymérisée plus rapidement avec une consommation réduite d'énergie.
- la matrice thermoplastique comporte du poly(méthacrylate de méthyle). La présence de poly(méthacrylate de méthyle) dans la matrice thermoplastique donne la possibilité de solubiliser la matrice dans le monomère ou de dépolymériser la matrice en méthacrylate de méthyle (MAM) et rend donc l'article particulièrement adapté à un recyclage selon l'invention.
- l'article est une pièce composite polymère. Cela permet une dépolymérisation sélective lors de son utilisation dans un ensemble avec des pièces fabriquées à partir de la composition décrite dans le cadre du procédé de l'invention.
- l'article comporte plusieurs portions en composés polymères et il comporte au moins un composé sensibilisant seulement dans une partie des portions en composés polymère. Lors de la dépolymérisation par micro-ondes, cela permet à la portion comprenant le composé sensibilisant d'être chauffée sélectivement et rapidement. Ainsi, la portion comprenant le composé sensibilisant peut atteindre un état fondu et/ou liquide tandis que la ou les portions sans sensibilisant (e.g. renfort, colle, mousse), ne chauffent pas ou chauffent beaucoup moins. La séparation de la matière thermoplastique fondue et/ou liquide de la portion non fondue est alors facilitée. Un meilleur traitement des déchets peut donc être opéré, grâce à l'invention.
- l'article comporte plusieurs portions en composés polymères et il comporte au moins un composé sensibilisant dans la totalité des portions en composés polymère. Un tel article présente l'avantage d'être recyclable rapidement et avec un coût énergétique réduit tout en permettant une meilleure acquisition de chaleur et une meilleure répartition de chaleur du fait de la présence du sensibilisant présent dans l'article dès sa fabrication.

L'invention a également pour objet un procédé de recyclage d'un article selon l'invention comprenant :
- le placement de l'article dans un réacteur, et
- l'application à l'article placé dans le réacteur d'un rayonnement micro-onde à une fréquence comprise entre 100 MHz et 1 GHz, de préférence entre 900 MHz et 2500 MHz.

Ce procédé permet de faciliter le recyclage. Les rayonnements micro-ondes permettent un chauffage rapide et localisé dans les zones contenant le sensibilisant engendrant une liquéfaction, gazéification ou dépolymérisation rapide et une faible consommation d'énergie. Contrairement à un traitement d'article à base de rayonnements micro-ondes où l'ensemble des articles thermoplastiques seraient mélangés *a posteriori* avec un composé sensibilisant, ici l'emploi d'un sensibilisant déjà intégré permet de réduire la consommation d'énergie, de cibler les parties de l'article les plus à même d'être recyclées et de réaliser des recyclages partiels d'articles. Il en résulte en outre qu'il est possible de traiter spécifiquement un type de polymère pour ne récupérer qu'un type de monomère. Par exemple dans un composite PMMA - mousse de polyuréthane, si le sensibilisant est dans le PMMA, alors il est possible de dépolymériser en partie le PMMA sans que la chaleur n'atteigne le polyuréthane et ne génère d'impuretés. Si le sensibilisant est mélangé *a posteriori,* il n'est plus possible de le placer seulement en contact avec le PMMA.

**Selon d'autres caractéristiques optionnelles du procédé de recyclage :**
- Il comporte en outre une étape de réduction du poids de l'article. En effet, sous l'effet du rayonnement, le composé sensibilisant va s'échauffer et augmenter la température du polymère thermoplastique entraînant alors une réduction du poids de l'article suite à une liquéfaction, une gazéification ou une dépolymérisation d'au moins une partie de l'article.
- Il comporte en outre les étapes suivantes :
   o l'initiation de la dépolymérisation par l'absorption de micro-ondes par un sensibilisant aux micro-ondes, et
   o la conversion d'une partie au moins de l'article en au moins un monomère de la matrice thermoplastique.
   Cela permet une dépolymérisation rapide et une faible génération de contaminants.
- le rayonnement micro-onde est appliqué jusqu'à ce que le poids de l'article soit réduit d'au moins 10 %, de préférence d'au moins 20 %.
- Il comporte une étape préalable d'application d'un rayonnement micro-onde et de mesure de la température des articles de façon à déterminer si l'article est un article à recycler. Une telle étape permet par exemple si elle est couplée à un moyen de tri des articles, de ne traiter que des articles comportant le composé sensibilisant. En effet, grâce à la présence d'un sensibilisant il est possible de ne chauffer que très rapidement le mélange de polymères pour en élever que légèrement la température. Lorsque la machine de tri est équipée d'une caméra thermique il devient alors possible de trier les particules riches en sensibilisant. Lorsque la machine de tri optique est aussi équipée de techniques spectroscopique Infrarouge ou Raman, il est aussi possible de trier le mélange de plastiques. L'avantage procuré par la présence de sensibilisant est, par exemple, de pouvoir trier des produits noirs qui ne sont pas reconnus par la spectroscopie infra-rouge.

D'autres caractéristiques et avantages de l'invention apparaîtront encore à la lecture de la description qui va suivre. Celle-ci est purement illustrative et doit être lue en regard des dessins annexés sur lesquels :
- la Figure 1 est une représentation schématique d'un exemple de préparation d'une composition thermoplastique comprenant un sensibilisant à la dépolymérisation par micro-ondes ;
- la Figure 2 est un système pour la mise en oeuvre du procédé de dépolymérisation, selon un mode de réalisation; et
- la Figure 3 montre un diagramme d'étape d'un mode de réalisation du procédé de dépolymérisation.

### [Description de l'invention]

Dans la suite de la description on entend par « polymère », soit un copolymère soit un homopolymère. On entend par « copolymère », un polymère regroupant plusieurs unités monomères différentes et par « homopolymère », un polymère regroupant des unités monomères identiques.

On entend par « matrice », une matière polymère solide pouvant servir de liant et se rapporte à tout type de composés, polymères, oligomères, copolymères ou copolymères à blocs, acryliques et méthacryliques. La matrice thermoplastique est une phase continue.

Le terme « amorceur radicalaire », au sens de l'invention, désigne un composé qui peut démarrer/initier la polymérisation d'un monomère ou de monomères.

Le terme « polymérisation », au sens de l'invention, désigne le procédé de conversion d'un monomère ou d'un mélange de monomères en un polymère.

Le terme « monomère », au sens de l'invention, désigne une molécule qui peut subir une polymérisation.

L'expression « composite polymère », au sens de l'invention, désigne un matériau multi-composants comprenant au moins deux composants non miscibles dans lequel au moins un composant est un polymère et l'autre composant peut par exemple être un renfort ou une charge pulvérulente.

On entend par « renfort », au sens de l'invention, un matériau solide qui est non dépolymérisable ou gazéifiable qui reste donc en fin de traitement, tel qu'un renfort fibreux ou une charge minérale.

On entend par « renfort fibreux », au sens de l'invention, plusieurs fibres, des stratifils unidirectionnels ou un mat à filament continu, des tissus, des feutres ou des non-tissés qui peuvent être sous la forme de bandes, nappes, tresses, mèches ou pièces.

On entend par « charge minérale », au sens de l'invention, toutes substances inertes de nature minérale pouvant être ajoutées à un polymère thermoplastique de façon à améliorer les propriétés mécaniques de l'article composite ou réduire son prix de revient. Les charges minérales peuvent par exemple être du quartz, du marbre ou de la silice.

On entend par « polymère thermoplastique », au sens de l'invention, un polymère généralement solide à température ambiante, pouvant être cristallin, semi-cristallin ou amorphe, et qui se ramollit lors d'une augmentation de température, en particulier après passage de sa température de transition vitreuse (Tg) et s'écoule à plus haute température et pouvant observer une fusion franche au passage de sa température dite de fusion (Tf) (lorsqu'il est semi-cristallin), et qui redevient solide lors d'une diminution de température en dessous de sa température de fusion et en dessous de sa température de transition vitreuse. Cela s'applique également pour des polymères thermoplastiques légèrement réticulés par la présence de monomères ou oligomères multifonctionnels présents en pourcentage massique de préférence de moins de 10 % pds, de préférence moins de 5 % pds et de façon préférée moins de 2 % pds ; et qui peuvent être thermoformés lorsqu'ils sont chauffés au-dessus de la température de ramollissement. Des exemples de thermoplastiques sont, par exemple : le polyéthylène basse densité (PEBD ou LDPE - pour l'acronyme anglais) notamment utilisé pour la production des sacs plastiques ou pour la construction automobile ; le polyéthylène téréphtalate (PET), le polychlorure de vinyle (PVC) utilisés notamment pour la production de bouteilles en plastique, ou encore le poly(méthacrylate de méthyle (PMMA) utilisé dans divers domaines industriels allant de la prothèse dentaire aux pales d'éoliennes.

On entend par « monomère (méth) acrylique », tout type de monomère acrylique et méthacrylique.

On entend par « polymère (méth)acrylique », un polymère comprenant essentiellement des monomères (méth)acryliques qui représentent au moins 50 % en poids ou plus du polymère (méth)acrylique.

Par « poly(méthacrylate de méthyle) » ou « PMMA », on entend au sens de l'invention, des homo- et copolymères de méthacrylate de méthyle (MAM), le rapport en poids de MAM dans le PMMA étant de préférence d'au moins 70 % en poids pour le copolymère de MAM.

On entend par « pyrolyse », la décomposition chimique de substances par traitement thermique afin de chauffer les substances à une température permettant l'obtention d'un gaz et/ou d'un condensat et/ou d'un résidu charbonneux.

Par « micro-ondes », on entend des ondes électromagnétiques ayant une longueur d'onde comprise par exemple entre 1 mètre et 1 centimètre mais également les ondes ultracourtes et les ondes courtes. Ainsi, les microondes au sens de l'invention présentent une fréquence comprise entre 10 MHz et 30 GHz et de préférence entre 900 MHz et 2500 MHz.

Par « composé sensibilisant à la dépolymérisation par micro-ondes », on entend un composé qui absorbe les radiations électromagnétiques micro-ondes et les restitue sous forme de chaleur. Dit autrement, le composé sensibilisant à la dépolymérisation par micro-ondes est un matériau avec un facteur de perte diélectrique élevé, par exemple supérieur à 0,1 à une fréquence comprise entre 900 MHz et 2500 MHz et à 25°C et/ou une constante diélectrique élevée, par exemple supérieure ou égale à 5 à une fréquence comprise entre 900 MHz et 2500 MHz et à 25°C, de sorte que l'exposition du matériau à des rayonnements électromagnétiques micro-ondes va se traduire par un échauffement rapide dudit matériau et/ou une tangente de l'angle de perte supérieure ou égale à 1 à une fréquence comprise entre 900 MHz et 2500 MHz et à 25°C.

On entend par « permittivité relative ou constante diélectrique d'un matériau ou d'une substance » la faculté de ce ou cette dernier(e) à se polariser, c'est-à-dire la capacité à être orienté par le champ électrique.

Par « facteur de pertes diélectriques » pour le composé sensibilisant aux micro-ondes, on entend la dissipation inhérente de l'énergie électromagnétique d'un matériau diélectrique (par exemple la chaleur). Il peut être calculé en fonction de l'angle de perte δ ou de la tangente de perte correspondante tan δ. Il traduit l'efficacité de la conversion de l'énergie du champ électrique en chaleur. Ainsi, le facteur de perte diélectrique permet d'apprécier l'aptitude d'un matériau à s'échauffer sous l'action d'un rayonnement micro-ondes.

Par « ferrite » on entend des oxydes ferrimagnétiques contenant principalement des ions Fe³⁺.

On entend par « sensiblement égale » au sens de l'invention une valeur variant de moins de 30 % par rapport à la valeur comparée, de préférence de moins de 20 %, de façon encore plus préférée de moins de 10 %.

Par « partie non sensible aux micro-ondes », on entend une partie de l'article présentant un facteur de pertes diélectriques faible ou une partie qui n'est pas ou peu affectée par un rayonnement micro-ondes.

Par « partie sensible aux micro-ondes », on entend une partie élaborée à partir d'une composition comprenant un précurseur de polymère thermoplastique et au moins un sensibilisant.

Les termes « comprendre » ou « comporter » n'excluent pas d'autres éléments ou d'autres étapes. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

Dans la description de modes de réalisation qui va suivre et dans les Figures des dessins annexés, les mêmes éléments ou des éléments similaires portent les mêmes références numériques aux dessins.

L'inventeur a développé une composition thermoplastique présentant des facilités de recyclage. La composition thermoplastique comprend au moins un précurseur de polymère thermoplastique et un composé sensibilisant à la dépolymérisation par micro-ondes.

Le **précurseur de polymère thermoplastique** est apte à former la matrice thermoplastique d'un article. Il peut par exemple être sélectionné parmi des composés comportant des groupements acrylates ou méthacrylates, carbonates, esters, styrène, sulfone, acétate de vinyle, ou leur mélange.

De façon préférée, l'au moins un précurseur de polymère thermoplastique peut également correspondre à un mélange comportant un monomère (méth)acrylique ou un mélange de monomères (méth)acryliques, un polymère ou oligomère (méth)acrylique et au moins un amorceur radicalaire.

**En ce qui concerne la composition thermoplastique liquide (méth)acrylique**, elle peut comprendre un monomère (méth)acrylique, un polymère (méth)acrylique précurseur et un amorceur radicalaire tel que cela est décrit dans WO2013056845 et WO2014013028.

En outre, lors de la préparation d'articles polymères, la viscosité de la composition liquide (méth)acrylique doit être régulée et adaptée de manière à ne pas être trop fluide ou trop visqueuse de façon à en faciliter la manipulation et à maintenir le sensibilisant en suspension. En outre, dans le cadre de la préparation d'un article composite polymère, une viscosité contrôlée peut permettre d'imprégner correctement le renfort. En effet, lorsque le mouillage est partiel, soit parce que le sirop est trop fluide ou trop visqueux, des zones « nues », c'est-à-dire des zones non imprégnées, et des zones dans lesquelles des gouttes de polymère se forment sur le renfort (e.g. les fibres), qui sont la cause de la formation de bulles, respectivement, apparaissent. Ces zones « nues » et ces bulles conduisent à l'apparition de défauts dans la pièce en composite polymère ou l'objet en composite polymère final, qui sont la cause, entre autres, d'une perte de résistance mécanique de la pièce en composite polymère ou de l'objet en composite polymère final. Ainsi, ladite composition liquide (méth)acrylique présente de préférence une viscosité dynamique comprise entre 10 mPa*s et 10 000 mPa*s à 25 °C. La viscosité dynamique de la composition liquide ou du sirop (méth) acrylique est dans une plage de 10 mPa*s à 10000 mPa*s, de préférence de 20 mPa*s à 7000 mPa*s et avantageusement de 20 mPa*s à 5000 mPa*s. La viscosité de la composition liquide (méth)acrylique, ou sirop (méth)acrylique liquide, peut être aisément mesurée avec un rhéomètre ou un viscosimètre. La viscosité dynamique est mesurée à 25 °C. Si le sirop (méth)acrylique liquide présente un comportement newtonien, c'est-à-dire sans fluidification par cisaillement, la viscosité dynamique est indépendante du cisaillement dans un rhéomètre ou de la vitesse du mobile dans un viscosimètre. Si la composition liquide présente un comportement non newtonien, c'est-à-dire avec fluidification par cisaillement, la viscosité dynamique est mesurée à un taux de cisaillement de 1s⁻¹ à 25 °C.

**Le monomère (méth)acrylique**, le monomère est choisi parmi l'acide acrylique, l'acide méthacrylique, des monomères esters alkyle acryliques, des monomères esters alkyle méthacryliques, des monomères esters hydroxyalkyle acryliques et des monomères esters hydroxyalkyle méthacryliques, et des mélanges de ceux-ci. De préférence, le monomère (méth)acrylique est choisi parmi l'acide acrylique, l'acide méthacrylique, des monomères esters hydroxyalkyle acryliques, des monomères esters hydroxyalkyle méthacryliques, des monomères esters alkyle acryliques, des monomères esters alkyle méthacryliques et des mélanges de ceux-ci, le groupe alkyle contenant de 1 à 22 carbones linéaires, ramifiés ou cycliques ; le groupe alkyle contenant de 1 à 12 carbones linéaires, ramifiés ou cycliques.

Avantageusement, le monomère (méth)acrylique est choisi parmi les méthacrylate de méthyle, méthacrylate d'éthyle, acrylate de méthyle, acrylate d'éthyle, acide méthacrylique, acide acrylique, acrylate de n-butyle, acrylate d'isobutyle, méthacrylate de n-butyle, méthacrylate d'isobutyle, acrylate de cyclohexyle, méthacrylate de cyclohexyle, acrylate d'isobornyle, méthacrylate d'isobornyle, acrylate d'hydroxyéthyle et méthacrylate de hydroxyéthyle, et des mélanges de ceux-ci.

Selon un mode de réalisation préféré, au moins 50 % en poids et de préférence au moins 60 % en poids du monomère (méth)acrylique est du méthacrylate de méthyle.

Selon un premier mode de réalisation plus préféré, au moins 50 % en poids, de préférence au moins 60 % en poids, plus préférablement au moins 70 % en poids, avantageusement au moins 80 % en poids et encore plus avantageusement 90 % en poids du monomère est un mélange de méthacrylate de méthyle avec facultativement au moins un autre monomère.

**En ce qui concerne le polymère (méth)acrylique précurseur,** il peut être mentionné des poly(acrylate d'alkyle) ou poly(méthacrylate d'alkyle). Selon un mode de réalisation préféré, le polymère (méth)acrylique est le poly(méthacrylate de méthyle) (PMMA).

Selon un mode de réalisation, l'homo- ou copolymère de méthacrylate de méthyle (MAM) comprend au moins 70 %, de préférence au moins 80 %, avantageusement au moins 90 % et plus avantageusement au moins 95 % en poids de méthacrylate de méthyle.

Selon un autre mode de réalisation, le PMMA est un mélange d'au moins un homopolymère et au moins un copolymère de MAM, ou un mélange d'au moins deux homopolymères ou deux copolymères de MAM avec un poids moléculaire moyen différent, ou un mélange d'au moins deux copolymères de MAM ayant une composition de monomères différente.

Le copolymère de méthacrylate de méthyle (MAM) peut comprendre de 70 % à 99,9 % en poids de MAM et de 0,1% à 30 % en poids d'au moins un second monomère ayant au moins une insaturation éthylénique pour copolymériser avec le MAM ou de 70 % à 99,7 % en poids de MAM et de 0,3% à 30 % en poids d'au moins un second monomère ayant au moins une insaturation éthylénique pour copolymériser avec le MAM. Le second monomère peut être par exemple le styrène, l'alpha-méthylstyrène, les acides acrylique et méthacrylique, et les (méth)acrylates d'alkyles dans lesquels le groupe alkyle contient de 1 à 12 atomes de carbone.

Ces monomères sont bien connus et il peut être particulièrement mentionné les acides acrylique et méthacrylique et des (méth)acrylates d'alkyle dans lesquels le groupe alkyle contient de 1 à 12 atomes de carbone. À titre d'exemples, il peut être mentionné l'acrylate de méthyle et le (méth)acrylate d'éthyle, de butyle ou de 2-éthylhexyle. De préférence, le comonomère est un acrylate d'alkyle dans lequel le groupe alkyle contient de 1 à 4 atomes de carbone.

Selon un premier mode de réalisation préféré, le copolymère de méthacrylate de méthyle (MAM) comprend de 80 % à 99,7 %, avantageusement de 90 % à 99,7 % et plus avantageusement de 90 % à 99,5 % en poids de méthacrylate de méthyle et de 0,3 % à 20 %, avantageusement de 0,3 % à 10 % et plus avantageusement de 0,5 % à 10 % en poids d'au moins un monomère contenant au moins une insaturation éthylénique qui peut copolymériser avec le méthacrylate de méthyle. De préférence, le comonomère est choisi parmi l'acrylate de méthyle et l'acrylate d'éthyle, et des mélanges de ceux-ci.

Selon un deuxième mode de réalisation préféré, le copolymère de méthacrylate de méthyle (MAM) comprend de 80 % à 99,9 %, avantageusement de 90 % à 99,9 % et plus avantageusement de 90 % à 99,9 % en poids de méthacrylate de méthyle et de 0,1 % à 20 %, avantageusement de 0,1 % à 10 % et plus avantageusement de 0,1 % à 10 % en poids d'au moins un monomère contenant au moins une insaturation éthylénique qui peut copolymériser avec le méthacrylate de méthyle. De préférence, le comonomère est choisi parmi l'acrylate de méthyle et l'acrylate d'éthyle, et des mélanges de ceux-ci.

La masse moléculaire moyenne en poids (M_{w} - abréviation en anglais) du polymère (méth)acrylique précurseur est de préférence élevée, c'est-à-dire supérieure à 50 000 g/mol et de préférence supérieur à 100 000 g/mol. Le poids moléculaire moyen en poids peut être mesuré par chromatographie d'exclusion stérique. En outre, le polymère (méth)acrylique précurseur peut présenter un degré de polymérisation supérieur ou égal à 500 et de façon plus préférée supérieur ou égal à 1000.

Le polymère (méth)acrylique précurseur est totalement soluble dans le monomère (méth)acrylique ou dans le mélange de monomères (méth)acryliques. Il permet d'augmenter la viscosité du monomère (méth)acrylique ou du mélange de monomères (méth)acryliques. La composition liquide ou solution obtenue est généralement appelée « sirop » ou « prépolymère ». La valeur de viscosité dynamique du sirop (méth)acrylique liquide est comprise entre 10 mPa.s et 10 000 mPa.s. La viscosité du sirop peut être aisément mesurée avec un rhéomètre ou un viscosimètre. La viscosité dynamique est mesurée à 25°C. Avantageusement, le sirop (méth)acrylique liquide ne contient aucun solvant additionnel ajouté volontairement.

**En ce qui concerne l'amorceur radicalaire,** il peut être mentionné des amorceurs de polymérisation radicalaires de préférence hydrosolubles ou des amorceurs de polymérisation radicalaires liposolubles ou partiellement liposolubles.

Les amorceurs de polymérisation radicalaires hydrosolubles sont notamment les persulfates de sodium, de potassium ou d'ammonium, utilisés seuls ou en présence d'agents réducteurs tels que les métabisulfites ou hydrosulfites de sodium, le thiosulfate de sodium, le formaldéhyde sulfoxylate de sodium, un mélange de sel disodique de 2-hydroxy-2-sulfinoacide acétique, de sulfite de sodium et de sel disodique de 2-hydroxy-2-sulfoacide acétique ou encore un mélange de sel disodique de l'hydroxysulfino d'acide acétique et de sel disodique de l'hydroxysulfo d'acide acétique.

Les amorceurs de polymérisation radicalaires liposolubles ou partiellement liposolubles sont notamment des peroxydes ou hydroperoxydes et des dérivés de 1 ' azobisisobutyronitrile. Les peroxydes ou hydroperoxydes sont utilisés en combinaison avec les agents réducteurs décrits précédemment de façon à baisser leur température d'activation.

Le pourcentage massique d'amorceur par rapport au poids total de mélange de monomères est de préférence compris entre 0,05% en poids et 3% en poids, de préférence entre 0,1% en poids et 2% en poids.

La masse moléculaire moyenne en poids de la matrice (méth)acrylate thermoplastique formée après polymérisation est généralement élevée, par exemple elle peut être supérieure à 50 000 g/mol, et de préférence supérieure à 100 000 g/mol.

La composition thermoplastique décrite dans le cadre du procédé de l'invention comprend en outre un **sensibilisant à la dépolymérisation par rayonnements micro-ondes.**

De façon préférée, le facteur de perte diélectrique du sensibilisant à la dépolymérisation par micro-ondes est supérieur ou égal à 0,1 à une fréquence comprise entre 900 MHz et 2500 MHz et à 25°C, de façon plus préférée supérieur ou égale à 0,2 et de façon encore plus préférée supérieur ou égale à 10. Ainsi, le composé sensibilisant absorbe l'énergie micro-ondes plus rapidement que le polymère thermoplastique, puis dissipe cette énergie sous forme de chaleur entraînant ainsi un échauffement rapide. De façon plus préférée, le facteur de perte diélectrique du sensibilisant à la dépolymérisation par micro-ondes est supérieur ou égale à 0,2 à 2,45 GHz et 25°C et de façon encore plus préférée, le facteur de perte diélectrique du sensibilisant à la dépolymérisation par micro-ondes est supérieur à 10 à 2,45 GHz et 25°C.

De façon préférée, le composant sensibilisant présente une constante diélectrique supérieure ou égale à 5 à une fréquence comprise entre 900 MHz et 2500 MHz et à 25°C, de façon plus préférée supérieur ou égale à 20 et de façon encore plus préférée supérieur ou égale à 50. De façon plus préférée, le composé sensibilisant présente une constante diélectrique supérieure à 20 à 2,45 GHz et 25°C et de façon encore plus préférée, supérieure à 50 à 2,45 GHz et 25°C.

De façon préférée, le composé sensibilisant présente une tangente de l'angle de pertes supérieure ou égale à 10⁻⁴ à une fréquence comprise entre 900 MHz et 2500 MHz et à 25°C, de façon plus préférée supérieur ou égale à 10⁻² et de façon encore plus préférée supérieure ou égale à 0,1, par exemple supérieure ou égale à 0,5. Ainsi, le composé sensibilisant sera en mesure d'absorber une quantité importante d'énergie en provenance du rayonnement microonde. De façon plus préférée, le composé sensibilisant présente une constante diélectrique supérieure à 20 à 2,45 GHz et 25°C et de façon encore plus préférée, supérieure à 50 à 2,45 GHz et 25°C.

Le facteur de perte diélectrique et la constante diélectrique sont des paramètres qui dépendent notamment de la fréquence appliquée et de la température du matériau. De préférence, ces paramètres sont mesurés selon la méthode décrite dans le document « Chauffage diélectrique - Principes et spécificités » Techniques de l'Ingénieur D 5 940 - 1, Roussy G. et al. 2008.

Par exemple, un sensibilisant à la dépolymérisation par micro-ondes peut être :
- un oxyde tel que Al₂O₃, (Ba₁₋ₓSrₓ)TiO₃, BaTiO₃, Ba(ZrₓTi₁₋ₓ)O₃, Ca-Si-Al-O, , CaTiO₃, Cr₂O₃, CuO, Fe₂O₃, Fe₃O₄, LaAlO₃, LaCrO₃, MnO₂, NiO, (Pb_{1-x-y}LaₓZr_{y})TiO₃, (Pb ₓMg₁₋ₓ)NbO₃, PbTiO₃, Ta₂O₅, TiO₂, YBa₂Cu₃O₇, ZnO, ZrO₂, SrTiO₃, Sr(Zr ₓTi₁₋ₓ)O₃, FeO(OH), MgTiO₃, Ta₂O₅, (Zr ₓSi₁₋ₓ)O₂, MgCO₃, avec x, y et x+y compris entre 0 et 1 (bornes comprises).
- un non-oxyde tel que CrB, Fe₂B, FeSi, Mg, Si
- un carbure tel que le carbure de silicium SiC,
- l'aluminate de calcium ;
- une charge carbonée telle que le noir de carbone, fibre de carbone, le graphite, le charbon actif, des nanotubes de carbone, le charbon,
- des ferrites, tels que le bismuth ferrite (BiFeO₃),
- un complexe métallique tel que YBa₂Cu₃O₇, LaCrO₃, CuO, CuFeS₂, ZnCl₂ , Ni-Phosphate, Chalcopyrite, Cordiérite, zéolithe, stéatite
- un nitrure tel que nitrure d'aluminium, nitrure de bore,
- un silicate,
- un fluorure tel que le fluorure de cérium, (Ba_{1-x-y}CaₓSr_{y})F₂, avec x, y et x+y compris entre 0 et 1 (bornes comprises).
- ou leur mélange.

Des exemples de sensibilisant à la dépolymérisation par micro-ondes avec leurs propriétés diélectriques à différentes fréquences sont données dans le tableau 1.

**Tableau 1**

| **Sensibilisant** | **Fréquence de mesure (en MHz)** | **Constante diélectrique** | **10⁴×Tan delta** | **Facteur de pertes** |
|---|---|---|---|---|
| Al₂O₃ | 1000 | 9,6 - 10 | 2 | 0,0019 - 0,002 |
| Al₂O₃ | 3600 | 9 | 5 | 0,0045 |
| Nitrure d'aluminium | 8500 | 8 | 35 | 0,028 |
| Ambre | 3000 | 2, 6 | 90 | 0,0207 |
| BaF₂ | 1000 | 7,3 | 10 | 0,0073 |
| BaTiO₃ | 2450 | 200-16000 | | 0,2 - 0,3 |
| BiFeO₃ | 9400 | 40 | 700 | 2, 8 |
| Nitrure de Bore | 8500 | 4,37 | 3 | 0,0013 |
| Nitrure de Bore | 100 | 4,08 | 2 .6 | 0,0011 |
| CaF₂ | 1000 | 6,5 | 10 | 0,0065 |
| Noir de carbone | 2500 | 20 | 5000 | 10 |
| Fluorure de cérium | 60 | 15,8 | 2530 | 4 |
| Chalcopyrite | 2450 | 11,01 | 7284 | 8,02 |
| Ferrites | 1000-10000 | 10-100 | 100-10000 | 1-100 |
| Basalte | 8500 | 10,2 | 5600 | 5,7 |
| Basalte | 1000 | 3,51 | 481 | 0,1688 |
| LaAlO₃ | 1 | 350 | 10 | 0,35 |
| Calcaire (Lucerne Valley) | 14000 | 8,21-8,45 | 38-80 | 0,0311 - 0,0668 |
| Cordiérite | 8520 | 4, 8 | 25 | 0,012 |
| Carbonate de magnésium | 8520 | 1.282 | 109 | 0,0139 |
| Métasilicate de magnésium | 14 000 | 6,37 | 12 | 0,0076 |
| Orthosilicate de magnésium | 8500 | 6,59 | 8 | 0,0053 |
| Marbre | 1 | 8 | 400 | 0,24 |
| MgOAl₂O₃ | 4070 - 4023 | 8,28 | 1 | 0,0008 |
| MgTiO₃ | 10 | 20 | 100 | 0,2 |
| SiC | 1000 | 107 | 6860 | 73,4 |
| SiC | 3000 | 60 | 5800 | 34,8 |
| SiC | 8500 | 47,7 | 5500 | 26,2 |
| Silicium | 1000 - 10000 | 11,7 - 12,9 | 50 - 150 | 0,0585 - 0,19 |
| Nitrite d'argent et de sodium | 9400 | 4,5 | <100 | <0,045 |
| SrF₂ | 1000 | 6,5 | 10 | 0,0065 |
| Stéatite | 1000 | 6 | 20 | 0,012 |
| Titanate de strontium | 1 | 200 | 5 | 0,1 |
| Zirconate de strontium | 1 | 38 | 3 | 0,038 |
| TiO₂ | 1000 | 80 | 8-30 | 0,0640 - 0,24 |
| Silicate de Zirconium | 10 | 10 | 100 | 0,1 |
| ZrO₂ | 1000 | 30 | 33 | 0,1 |

En particulier, le composé sensibilisant peut être sélectionné parmi : SiC, TiO₂, ZrO₂, BaTiO₃, SrTiO₃, MgTiO₃, CaTiO₃, LaAlO₃, Ferrites, Basalte, Marbre et leurs mélanges.

De façon préférée, le composé sensibilisant peut être sélectionné parmi : SiC, TiO₂, ZrO₂, Marbre et leurs mélanges.

Alternativement, de façon également préférée, le composé sensibilisant peut être sélectionné parmi : Ferrites, Titanate de Baryum, Titanate de Strontium, Titanate de Calcium, Titanate de Magnésium et leurs mélanges.

La quantité de sensibilisant à la dépolymérisation par micro-ondes dans la composition thermoplastique peut être de 0,1 % à 50 % en poids de la composition thermoplastique, de préférence inférieure à 10 %, de façon plus préférée de 0,5 à 5 % en poids de la composition thermoplastique. Avantageusement, on utilise une quantité de sensibilisant minimum afin de minimiser les autres effets du sensibilisant sur les propriétés de la composition thermoplastique et/ou des articles susceptibles d'être fabriqués avec cette composition.

La composition peut comprendre, en outre, au moins un additif tel qu'un stabilisant, un pigment, un plastifiant tel que les phtalates, un promoteur d'adhésion, un absorbeur UV, un antioxydant, un retardateur de flamme, un colorant, un lubrifiant, un agent de démoulage, une charge, un agent antistatique, un fongicide, un tensioactif et/ou des billes de polymère réticulées etc. Avantageusement, l'ajout d'un additif permet d'améliorer les propriétés de la composition thermoplastique. Par exemple, les charges améliorent la résistance thermique ou chimique, les plastifiants permettent de réduire la rigidité, les stabilisants préviennent la dégradation des polymères, les antistatiques empêchent le dépôt de poussière, les lubrifiants limite l'usure, les retardateurs de flamme offrent une meilleure résistance au feu etc.

Le pourcentage massique de l'ensemble des additifs et des charges par rapport au poids total de composition thermoplastique (méth)acrylique est de préférence inférieur à 30 % en poids, de préférence inférieur à 10 % en poids.

La composition thermoplastique peut comprendre, en variante, au moins un solvant du polymère thermoplastique.

**Selon un autre aspect,** il est décrit (mais non revendiqué) **un procédé de fabrication d'un article comprenant** :
- une étape de préparation d'une composition thermoplastique selon l'invention,
- éventuellement, une étape d'imprégnation d'un renfort avec ladite composition, et
- une étape de formation dudit article à partir de la composition.

La fabrication d'un article à partir de la composition thermoplastique comprenant un sensibilisant à la dépolymérisation par micro-ondes comprend l'étape de préparation de ladite composition.

La préparation de la composition thermoplastique peut être réalisée par toute méthode industrielle permettant de mélanger le composé sensibilisant avec l'au moins un précurseur de polymère thermoplastique.

Le procédé de fabrication comporte également une étape de polymérisation de l'au moins un précurseur de polymère thermoplastique de façon à former une matrice thermoplastique. Ainsi, le procédé de fabrication d'un article décrit dans le cadre de l'invention peut comprendre la génération, à partir de l'au moins un précurseur de polymère thermoplastique, d'une matrice thermoplastique. La matrice thermoplastique peut être obtenue par toutes les méthodes de préparation de composition de polymères connues de l'homme du métier, par exemple par tout type de polymérisation radicalaire contrôlée ou par polymérisation anionique ou encore par photopolymérisation à partir des composants monomères. La réaction de polymérisation peut être conduite dans tout type de dispositif adapté tel que des dispositifs d'extrusion, d'injection ou moulage.

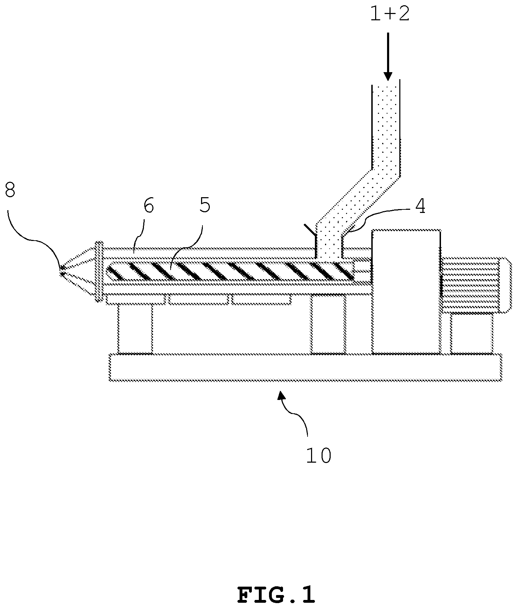

En référence à la Figure 1, l'au moins un précurseur de polymère thermoplastique 1 et le composé sensibilisant 2 à la dépolymérisation par micro-ondes sont introduits dans une extrudeuse 10 par exemple via une trémie 4. Dans l'extrudeuse, le mélange est chauffé et ramolli, grâce à une vis 5 sans fin qui se trouve dans un fourreau 6 (tube) chauffé pour rendre les granulés malléables. On obtient alors une matrice polymérique à l'état fondu qui est entraînée vers la sortie 8 grâce à la vis 5. La tête de sortie de l'extrudeuse donne sa forme à la matrice polymérique laquelle est refroidie en sortie pour être transformée en granulés (non représenté sur la figure 1). La matrice thermoplastique, une fois préparée, prend alors la forme de granulés ou de poudre.

La **matrice thermoplastique** pouvant être obtenue à partir de l'au moins un précurseur de polymère thermoplastique est une matrice comprenant des polymères thermoplastiques, tels que des polymères linéaires ou ramifiés, non réticulés et présentant une certaine malléabilité facilitant ainsi leur mise en forme par application de chaleur et de pression. Les thermoplastiques retrouvent leur rigidité initiale après refroidissement, sans pour autant que la matière soit thermiquement dégradée.

Un polymère thermoplastique pouvant être employé dans la matrice thermoplastique peut être par exemple : un homo- et copolymère d'oléfines tels que les copolymères acrylonitrile-butadiène-styrène, les copolymères styrène-butadiène-méthacrylate d'alkyle (ou SBM) ; le polyéthylène, le polypropylène, le polybutadiène et le polybutylène; les homo- et copolymères acryliques et les poly(méth)acrylates d'alkyles tels que le poly(méthacrylate de méthyle) ; les homo- et copolyamides ; les polycarbonates ; les polyesters dont le poly(téréphtalate d'éthylène) et le poly(téréphtalate de butylène) ; les polyéthers tels que le poly(phénylène éther), le poly(oxyméthylène), le poly(oxyéthylène) ou poly(éthylène glycol) et le poly(oxypropylène) ; le polystyrène ; les copolymères de styrène et d'anhydride maléique ; le poly(chlorure de vinyle) ; les polymères fluorés tels que le poly(fluorure de vinylidène), le polytétrafluorure d'éthylène et le polychlorotrifluoro-éthylène ; les caoutchoucs naturels ou synthétiques ; les polyuréthanes thermoplastiques ; les polyaryl éther cétones (PAEK) tels que la polyétheréthercétone (PEEK) et la polyéther cétone cétone (PEKK) ; le polyétherimide ; la polysulfone le poly(sulfure de phénylène) ; l'acétate de cellulose ; le poly(acétate de vinyle) ; et leurs mélanges.

Des exemples de valeurs de constante diélectrique et de facteur de pertes pour certains thermoplastiques à 2450 MHz sont donnés dans le tableau 2 et à 1000 MHz dans le tableau 3.

**Tableau 2**

| **Thermoplastique** | **Constante diélectrique à 2450 MHz (e')** | **Facteur de pertes à 2450 MHz (e")** |
|---|---|---|
| Polyamide | 3, 0 | 0,04 |
| Polyester | 4,0 | 0,04 |
| Polyéthylène | 2,25 | 0,001 |
| Polystyrène | 2,55 | 0,0005 |
| Polytétrafluorure d'éthylène | 2,1 | 0,0003 |
| Poly(chlorure de vinyle) | 2,9 | 0,1 |
| PMMA | 2,6 | 0,015 |

**Tableau 3**

| **Thermoplastique** | **Constante diélectrique à 1000 MHz** | **Facteur de pertes à 1000 MHz** |
|---|---|---|
| ETFE (ethylene tetrafuloro ethylene copolymer) | 2,4 | 0,0005 |
| FEP (fluorinated ethylene-propylene copolymer) | 2,05 | 0,0015 |
| PFA (perfuoroalkoxy) | 2,0-2,1 | 0,00045 |
| PCTFE (polychlorotrifluoroethylene) | 2,3 | 0,004 |
| PTFE (polytetrafluoroethylene) | 2,0 - 2,1 | <0, 0001 |
| PC (Polycarbonate), | 2,89 | 0,012 |
| PET (Polytethyleneterephthalate) | 2,8 | 0,003 - 0,008 |
| LDPE (Low density polyethylene) | 2,2 | 0,0003 |
| LLDPE (linear low density polyethylene) | 2,2 | 0,0003 |
| HDPE (high density polyethylene) | 2,3 | 0,0005 |
| PMMA (Polymethylmethacrylate) | 2,58 | 0,009 |
| PP (Polypropylene) | 2,2 | 0,0003 |
| PS (Polystyrène) | 2,4 - 2,7 | 0,0005 |
| PVC (Polyvinylchloride) | 2,8 | 0,019 |
| PVDC (Polyvinylidenechloride) | 2,7 | 0,016 |
| ABS Moulé (acrylonitrile butadiène styrène) | 2,0 - 3,5 | 0,005 - 0,0190 |

Comme cela est présenté dans les tableaux 2 et 3, les polymères thermoplastiques ne présentent pas un facteur de pertes diélectriques élevé. Dans ce cas, l'incorporation d'un sensibilisant aux micro-ondes sera d'autant plus avantageux et permettra d'obtenir un article qui pourra être chauffé plus rapidement et sélectivement, ce qui permet un gain de temps et d'énergie par rapport à un chauffage traditionnel tel que la pyrolyse thermique. Ainsi, de préférence, la matrice thermoplastique comporte un polymère présentant un facteur de perte diélectrique inférieur ou égal à 0,1, tel que mesuré à 2450 MHz et à 25°C, de façon plus préférée inférieur ou égal à 0,05, et de façon encore plus préférée inférieur ou égal à 0,02.

En particulier, la matrice thermoplastique de l'article est une matrice poly(méthacrylate de méthyle) (PMMA), dans lequel un sensibilisant est incorporé.

La composition thermoplastique ou la matrice thermoplastique peuvent ensuite être transformées en article ou en pièce par tout procédé de plasturgie conventionnelle, tel que l'extrusion, la co-extrusion, le thermoformage, le moulage par injection, le moulage par compression, le moulage par soufflage, la multi-injection ou la formation de plaque par coulage. Les procédés évoqués étant non limitatifs. Ainsi, dès sa conception, l'article formé à partir de la composition thermoplastique présente l'avantage d'être recyclable rapidement et avec un coût énergétique réduit. La composition thermoplastique peut être utilisée pour la réalisation de pièces, de profilés, de plaques ou de film par exemple.

Ainsi, il est également décrit **un article** comportant une matrice thermoplastique formée à partir de la composition thermoplastique décrite ci-dessus.

L'article formé à partir de la composition thermoplastique peut comprendre le composé sensibilisant à la dépolymérisation par micro-ondes dans la totalité de la masse de polymère thermoplastique. De façon plus particulière, l'article peut être entièrement constitué de la composition thermoplastique comprenant la matrice thermoplastique et le composé sensibilisant.

Dans une variante de réalisation, l'article peut ne pas être entièrement constitué à partir de la composition thermoplastique. L'article peut comporter un composé sensibilisant seulement sur une partie de la masse de la matrice thermoplastique. Par exemple, l'article peut comprendre une première portion et au moins une seconde portion. La première portion peut être réalisée à partir de la composition thermoplastique et comprend alors le composé sensibilisant à la dépolymérisation. L'au moins une seconde portion peut être réalisée sans sensibilisant à la dépolymérisation. Par exemple, la première portion peut être réalisée à partir d'une composition thermoplastique PMMA avec un sensibilisant. La seconde portion peut être un renfort ou une masse de polymère ne contenant pas de sensibilisant à la dépolymérisation par micro-ondes.

La première portion et une seconde portion peuvent ensuite être jointes par collage afin de donner un article. Un tel article présente l'avantage d'être sélectivement dépolymérisable sans tri préalable. La colle pourra contenir ou non un sensibilisant aux micro-ondes suivant son interférence avec le monomère lors de sa dégradation thermique. En effet, lors de la dépolymérisation par micro-ondes, la portion comprenant le composé sensibilisant est chauffée sélectivement et rapidement. Ainsi, la portion comprenant la composition thermoplastique peut atteindre un état fondu tandis que la portion sans sensibilisant, en composite par exemple, ne chauffe pas. La séparation de la matière thermoplastique fondue de la portion non fondue est alors facilitée. Un meilleur traitement des déchets peut donc être opéré, grâce à l'invention.

Avantageusement, la composition thermoplastique comprenant au moins un précurseur de polymère thermoplastique et au moins un composé sensibilisant aux micro-ondes, peut être utilisée pour la préparation de matériaux composites. Un tel matériau composite peut comprendre par exemple, outre la matrice thermoplastique et le composé sensibilisant à la dépolymérisation par micro-ondes, un renfort tel qu'un renfort fibreux ou une charge minérale.

Le renfort fibreux se rapporte généralement à plusieurs fibres, des stratifils unidirectionnels ou un mat à filament continu, des tissus, des feutres ou des non-tissés qui peuvent être sous la forme de bandes, nappes, tresses, mèches ou pièces. Plus particulièrement, un renfort fibreux comprend un assemblage d'une ou plusieurs fibres, généralement plusieurs fibres, ledit assemblage pouvant avoir différentes formes et dimensions, unidimensionnelles, bidimensionnelles ou tridimensionnelles. La forme unidimensionnelle correspond à des fibres longues linéaires. Les fibres peuvent être discontinues ou continues. Les fibres peuvent être agencées de façon aléatoire ou de façon parallèle les unes aux autres, sous la forme d'un filament continu. La forme bidimensionnelle correspond à des mats fibreux ou des renforts non tissés ou des stratifils tissés ou des faisceaux de fibres, qui peuvent également être tressés. Même si la forme bidimensionnelle a une certaine épaisseur et, par conséquent, en principe une troisième dimension, elle est considérée comme étant bidimensionnelle selon la présente invention. La forme tridimensionnelle correspond, par exemple, à des mats ou des renforcements fibreux non-tissés ou des faisceaux empilés ou pliés de fibres ou des mélanges de ceux-ci, un assemblage de la forme bidimensionnelle dans la troisième dimension.

Le renfort fibreux peut être par exemple de la fibre de verre, de la fibre de carbone, de la fibre d'aramide, une fibre naturelle telle que le lin ou le chanvre, cette liste étant non limitative.

Les fibres du renfort fibreux ont par exemple un diamètre compris entre 0,005 µm et 100 µm, de préférence entre 1 µm et 50 µm, plus préférablement entre 5 µm et 30 µm et avantageusement, entre 10 µm et 25 µm.

De préférence, les fibres du renfort fibreux décrit dans le cadre de la présente invention sont choisies parmi des fibres continues pour la forme unidimensionnelle, ou parmi les fibres longues ou continues pour la forme bidimensionnelle ou tridimensionnelle du renfort fibreux.

La préparation du matériau composite peut être réalisée dans un dispositif de compoundage, comme précédemment, dans lequel est introduite la composition thermoplastique comprenant l'au moins un précurseur de polymère thermoplastique et le composé sensibilisant aux micro-ondes. Le mélange est porté à l'état fondu afin d'être mélangé à l'aide d'un dispositif à fort cisaillement tel qu'une extrudeuse à double vis co-rotative ou un co-malaxeur. La composition sous forme fondue peut alors être utilisée pour une étape d'imprégnation du renfort fibreux afin d'obtenir un matériau composite. Un des avantages est que les matériaux composites polymères thermoplastiques peuvent être fabriqués à une température inférieure à 150°C, de préférence inférieure à 120°C, de façon encore plus préférée inférieure à 100°C. Par exemple, l'étape d'imprégnation du renfort fibreux avec la composition liquide (méth)acrylique est réalisée à une température inférieure à 150°C, de préférence inférieure à 120°C, de façon encore plus préférée inférieure à 100°C ou inférieure à 80°C. En effet, la composition liquide (méth)acrylique, avantageusement utilisée pour la fabrication de matériaux en composite polymère thermoplastique, est liquide à une température bien inférieure aux températures de fusion classiques des thermoplastiques classiques. Ainsi, cela permet de réaliser les matériaux en composite polymère thermoplastique qui sont de très grande dimension sans avoir à mettre en oeuvre des procédés où lesdites pièces sont chauffées à des températures élevées. En outre, une étape de polymérisation de la composition liquide (méth)acrylique, imprégnant ledit matériau peut-être optionnellement réalisée.

Un tel matériau composite peut être utilisé pour la fabrication d'un article en composite ou pièce composite polymère. Cette pièce en composite polymère présente l'avantage de pouvoir être dépolymérisée sélectivement lors d'une utilisation dans un ensemble avec des pièces non fabriquées à partir de la composition thermoplastique comprenant un sensibilisant à la dépolymérisation par micro-ondes.

L'invention concerne également **un procédé de recyclage 100 d'un article réalisé entièrement ou partiellement à partir de la composition thermoplastique comprenant un sensibilisant à la dépolymérisation.**

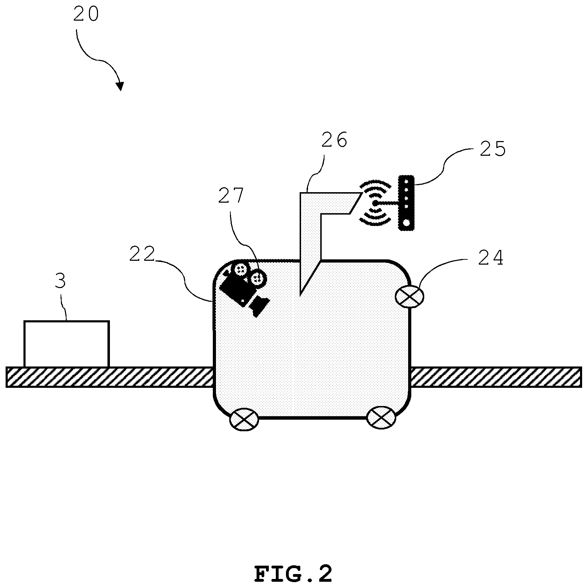

Le procédé de recyclage 100 peut par exemple être mis en oeuvre par tout type de système de dépolymérisation pour plastique existant. Par exemple, comme représenté à la Figure 2, le système 20 de recyclage peut comprendre :
- un réacteur 22 pour recevoir l'article ou l'objet 3 à recycler,
- des moyens de connexion 24, tels que des conduits, adaptés pour être reliés à une pompe à vide ou à un circuit de distribution de gaz tel qu'un gaz inerte, par exemple de l'azote (N₂), du dioxyde de carbone (CO₂), de l'air appauvri ou de l'argon (Ar),
- un générateur 25 de micro-ondes, un magnétron ou un klystron par exemple, qui transforme l'énergie électrique en rayonnement micro-ondes,
- un guide d'onde 26 afin de transférer l'énergie micro-ondes du générateur vers le réacteur.

Le système peut également comprendre une caméra thermique 27 permettant d'estimer la température d'un article ou d'une pièce placée dans le réacteur et avantageusement associée à un dispositif de tri. Le tri précède alors la dépolymérisation, qui peut être réalisée par des moyens conventionnels. Avantageusement, le système de recyclage selon l'invention peut également comprendre un spectroscope Infrarouge et/ou un spectroscope Raman.

En outre, le système peut comprendre des éléments non représentés sur cette figure tels qu'une valve de régulation de pression, un capteur de température, un capteur de pression, un condenseur pour condenser les gaz issus de la dépolymérisation, un agitateur pour mélanger les déchets dans le réacteur, une grille de séparation isoler les résidus et/ou un collecteur pour collecter les fluides produits lors de la dépolymérisation.

Le procédé de recyclage est un procédé pouvant avantageusement comprendre la dépolymérisation assistée par micro-ondes, laquelle peut être vue comme une dépolymérisation dans laquelle le chauffage est obtenu par application de rayonnements micro-ondes. Le chauffage induit par les micro-ondes présente l'avantage d'être rapide et localisé dans les zones contenant le composé sensibilisant. Il se fait dans le volume de l'échantillon, sans gradient thermique à la différence du chauffage conventionnel qui implique un gradient par convection à travers les parois du réacteur.

Alternativement, le chauffage peut conduire à une transformation de l'article à recycler ne correspondant pas à une dépolymérisation. Ainsi, le chauffage peut conduire à une liquéfaction ou à une gazéification d'une partie au moins de l'article à recycler.

Selon un mode de réalisation, le procédé de dépolymérisation peut comprendre :
- le placement 110 de l'article dans un réacteur adapté pour la dépolymérisation assistée par micro-onde,
- l'application 120 d'un rayonnement micro-onde, à une fréquence donnée, à l'article placé dans le réacteur,
- l'initiation 130 de la dépolymérisation, par l'absorption de micro-ondes par un sensibilisant aux micro-ondes, pendant un temps donné afin d'atteindre une température donnée dans le réacteur, et
- la conversion 140 d'une partie au moins de l'article en liquide ou en gaz correspondant à au moins un monomère de la matrice thermoplastique.

Le procédé peut comprendre en outre, avant l'étape de placement de l'article dans un réacteur par exemple pour la dépolymérisation, une étape :
- de broyage de l'article à recycler jusqu'à l'obtention de paillettes, et/ou
- le lavage des paillettes obtenues après broyage, et/ou
- le rinçage, l'essorage, le séchage et/ou le tamisage.

Le procédé peut également comprendre une étape de tri basée sur l'acquisition et de traitement de données provenant d'une caméra thermique. Les données provenant d'une caméra thermique peuvent avantageusement être complétées par des données de spectroscopie Infrarouge et/ou Raman. L'opération de tri peut alors précéder une opération de recyclage mécanique ou thermique, y compris par des moyens conventionnels.

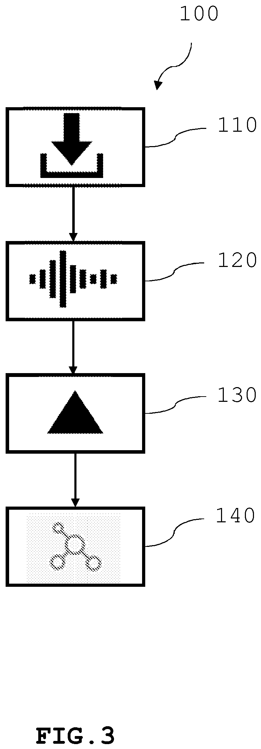

En référence au diagramme de la Figure 3, le procédé de recyclage 100 va être décrit dans le cas où l'article à recycler est un article entièrement manufacturé à partir d'une composition comprenant du poly(méthylméthacrylate) et un composé sensibilisant à la dépolymérisation par micro-ondes.

Dans une étape 110, l'article est placé dans le réacteur d'un système de recyclage, de préférence dans un système de dépolymérisation. De façon préférée, le réacteur est opéré sous vide afin d'extraire le monomère à l'état gazeux (e.g. du MAM) le plus rapidement de la zone de dépolymérisation. Le réacteur est opéré en continu, en alimentant le polymère par une extrémité. Le temps de séjour du polymère dans l'installation et le taux de dépolymérisation sont contrôlés par le débit de produit. La longueur de la zone exposée aux microondes est ajustée en multipliant le nombre de guides d'ondes le long du réacteur. La profondeur de pénétration est déterminée par les paramètres diélectriques du produit. Par conséquent, le réacteur est avantageusement sensiblement plat pour que la totalité du produit soit exposé aux microondes.

Le produit se déplace dans le réacteur soit par gravité, soit par brassage, soit encore par déplacement piston. Dans le premier cas, le réacteur est alimenté par le haut, et le produit résiduel est soutiré par le bas. Cette configuration est particulièrement avantageuse pour effectuer des temps de séjours courts. Le débit de soutirage en pied de réacteur détermine le temps de séjour dans la zone d'irradiation microondes. Dans le second cas, le brassage permet de déplacer le polymère vers l'autre extrémité du réacteur. Dans le troisième cas, le polymère est poussé par un piston continu ou discontinu (on pousse le polymère à traiter, puis on recharge le piston pour effectuer un nouveau déplacement). Dans cette configuration, l'écoulement du solide peut se faire dans différentes directions. Par exemple, le solide est introduit par le bas du réacteur est poussé vers le haut, et les gaz de dépolymérisation sont aspirés par le haut du réacteur. Se faisant les gaz sont en contact avec les résidus charbonnés qui sortent du réacteur vers le haut. Ces résidus sont poreux. Ils se refroidissent progressivement. Un avantage particulier de cette configuration du réacteur est que les produits lourds qui sont éliminés avec le monomère (dimères, oligomères et autres produits de décomposition lourds) se re-condensent progressivement sur le résidu charbonné qui est traversé par les gaz de dépolymérisation. L'effluent sortant du réacteur est alors appauvri en produits lourds. Les gaz sont ensuite condensés, et le monomère (e.g. MAM) est purifié par distillation.

Lors d'une étape 120, l'article est soumis à un rayonnement micro-ondes d'une fréquence donnée pendant un temps donné. Il est possible d'utiliser des rayonnements de très basse fréquence de façon à améliorer la pénétration au sein du matériau, il est alors possible de descendre jusqu'à 10 MHz. Il est en outre préférable de choisir une fréquence à laquelle le composé sensibilisant présente des valeurs de constante diélectrique et de tangente de facteur de perte favorisant une élévation rapide de la température telles que des valeurs respectivement supérieures à 0,1 et 10⁻⁴.

Dans un mode de réalisation, la fréquence appliquée à l'article placé dans le réacteur est comprise entre 900 MHz à 2500 MHz et de préférence sensiblement égale à 2450 MHz. Le temps d'irradiation ou d'exposition aux micro-ondes d'un article à traiter peut être de l'ordre des minutes. Par exemple, ce temps peut être de 5, 10, 20, 30 ou 45 min. Le temps d'exposition peut également être de l'ordre de l'heure, par exemple 1h, 2h ou 3h. Ce temps est ajusté en fonction du volume de déchets à traiter et/ou de la taille des articles à traiter.

L'application du rayonnement micro-ondes pendant le temps donné permet l'initiation de la dépolymérisation assistée par micro-ondes selon une étape 130. Ensuite, il y a, au cours d'une étape 140, dépolymérisation de la matrice thermoplastique de l'article. Ainsi, la matrice polymère en PMMA est dépolymérisée et est convertie en un résidu visqueux comprenant le monomère méthacrylate de méthyle (MAM). Avantageusement, le PMMA peut se solubiliser dans le monomère.

Le procédé présente l'avantage de permettre une dépolymérisation rapide et sélective comparativement aux méthodes usuelles de dépolymérisation telle que la pyrolyse thermique. En effet, grâce au sensibilisant, l'aptitude du PMMA à être chauffé est augmentée et l'échauffement du PMMA est obtenu plus rapidement. Il en résulte un gain de temps.

D'autre part, le rayonnement micro-onde est appliqué à un article à dépolymériser et il n'est donc pas nécessaire de chauffer au préalable le réacteur dans lequel l'article est placé, comme cela est le cas dans une pyrolyse classique. Dans le cas du PMMA, la dépolymérisation peut s'opérer à une température supérieure à 200°C. L'objet du procédé est de ne chauffer que les zones que l'on veut dépolymériser. Ainsi le composé sensibilisant n'est que dans le PMMA et non dans les fibres, les mousses et autres corps étrangers qui sont introduits dans les composites. On place ainsi les sensibilisants dans les zones sélectionnées pour être ultérieurement dépolymérisée. Ainsi des économies d'énergie sont réalisées puisque seule la pièce à dépolymériser est chauffée. De préférence, la dépolymérisation peut alors s'opérer à une température moyenne dans le réacteur inférieure à 400°C, de façon plus préférée inférieure à 300°C et de façon encore plus préférée inférieure à 250°C.

La température donnée dans le réacteur peut être comprise entre 70°C et 500°C. En particulier, la température donnée peut se situer entre 100°C et 200°C, de préférence entre 110°C et 190°C. Cette gamme de température convient en particulier à la dépolymérisation du PMMA qui est un polymère d'intérêt. Cette température peut être mesurée au moyen d'une caméra thermique par exemple.

Dans les variantes de procédé, il est possible de ne réaliser qu'une réaction partielle notamment avec des sensibilisants dont la permittivité et / ou la tangente delta augmente avec la température. Dans ce cas, plus le rayonnement microonde est prolongé, plus la zone chauffée absorbe les microondes. Cela a pour effet de très localement liquéfier et vaporiser le monomère. Si le composé sensibilisant est bien dispersé, alors il est possible de créer de la porosité dans le polymère et de nombreux sites d'amorçage de la dépolymérisation radicalaire. Dans ce cas, le traitement microondes peut être utilisé comme un prétraitement avant soit un traitement de solubilisation dans le monomère à chaud, ou encore comme prétraitement avant un traitement thermique conventionnel. La porosité générée permet d'accélérer la dépolymérisation thermique.

Dans un mode de réalisation, le procédé de recyclage est un procédé de dépolymérisation d'un article ayant une partie non sensible aux micro-ondes et une partie sensible aux micro-ondes. Comme précédemment, l'article est placé dans le réacteur du système de dépolymérisation pour être soumis à un rayonnement micro-ondes de fréquence donnée pendant un temps donné. La dépolymérisation est alors initiée et la chaleur est générée uniquement dans la partie sensible aux micro-ondes, la partie non sensible aux micro-ondes n'étant pas affectée par le rayonnement micro-ondes. Ainsi il est possible de procéder à une dépolymérisation sélective d'une partie d'un article.

Le procédé s'avère être particulièrement avantageux lorsque l'article à traiter est un article composite comprenant notamment la composition thermoplastique et des fibres, par exemple des fibres de verre. En effet, lors de la dépolymérisation d'article composite par des procédés de dépolymérisation conventionnels, une haute température est appliquée à l'ensemble de l'article, notamment aux parties minérales et organiques du composite qui ne peuvent être dépolymérisées. Ainsi, l'énergie fournie dans les procédés conventionnels pour dépolymériser sert aussi à chauffer des parties non dépolymérisables. Grâce à la composition thermoplastique décrite dans le cadre de l'invention, le procédé de dépolymérisation peut être appliqué spécifiquement à la composition thermoplastique. Il en résulte un gain de temps et d'énergie permettant ainsi une réduction des coûts énergétiques globaux.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en oeuvre par la personne du métier à la lecture de la présente description et des dessins annexés.

## Revendications

1. Procédé de recyclage d'un article comprenant une matrice thermoplastique formée à partir d'une composition thermoplastique comprenant au moins un composé sensibilisant à la dépolymérisation par micro-onde, ledit procédé comprenant les étapes suivantes:
- le placement de l'article dans un réacteur, et
- l'application, à l'article placé dans le réacteur, d'un rayonnement micro-onde à une fréquence comprise entre 10 MHz et 5,8 GHz et préférablement entre 900 MHz et 2500MHz, de manière à initier une dépolymérisation par absorption de micro-ondes par ledit composé sensibilisant aux micro-ondes, et une conversion d'une partie au moins de l'article en au moins un monomère de base de ladite matrice thermoplastique.

2. Procédé de recyclage selon la revendication 1, **caractérisé en ce qu'**il comporte en outre une étape de réduction du poids de l'article.

3. Procédé de recyclage selon l'une quelconque des revendications 1 à 2, **caractérisé en ce que** le rayonnement micro-onde est appliqué jusqu'à ce que le poids de l'article soit réduit d'au moins 10 %.

4. Procédé de recyclage selon l'une quelconque des revendications 1 à 3, comprenant une étape préalable d'application d'un rayonnement micro-onde et de mesure de la température des articles de façon à déterminer si l'article est un article à recycler.

5. Procédé de recyclage selon l'une quelconque des revendications précédentes, **caractérisé en ce que** le composé sensibilisant à la dépolymérisation présente un facteur de perte diélectrique supérieur ou égal à 0,1 à une fréquence comprise entre 900 MHz et 2500 MHz et à 25°C.

6. Procédé de recyclage selon l'une quelconque des revendications précédentes, **caractérisé en ce que** le composé sensibilisant à la dépolymérisation présente une constante diélectrique supérieure ou égale à 5 à une fréquence comprise entre 900 MHz et 2500 MHz et à 25°C.

7. Procédé de recyclage selon l'une quelconque des revendications précédentes, **caractérisé en ce que** le composé sensibilisant à la dépolymérisation présente une tangente de l'angle de pertes supérieure ou égale à 10⁻⁴ à une fréquence comprise entre 900MHz et 2500MHz et à 25°C.

8. Procédé de recyclage selon l'une quelconque des revendications précédentes, **caractérisé en ce que** le composé sensibilisant à la dépolymérisation est présent à une teneur allant de 0,1 % à 50 % en poids de la composition thermoplastique.

9. Procédé de recyclage selon l'une quelconque des revendications précédentes, **caractérisé en ce que** le composé sensibilisant à la dépolymérisation est sélectionné parmi : SiC, TiO₂, ZrO₂, BaTiO₃, SrTiO₃, MgTiO₃, CaTiO₃, LaAlOs, Ferrites, Basalte, Marbre et leurs mélanges.

10. Procédé de recyclage selon l'une quelconque des revendications précédentes, **caractérisé en ce que** le composé sensibilisant à la dépolymérisation est sélectionné parmi : Ferrites, Titanate de Baryum, Titanate de Strontium, Titanate de Calcium, Titanate de Magnésium et leurs mélanges.

11. Procédé de recyclage selon l'une quelconque des revendications précédentes, **caractérisé en ce que** le composé sensibilisant à la dépolymérisation est sélectionné parmi : SiC, TiO₂, ZrO₂, Marbre et leurs mélanges.

12. Procédé de recyclage selon l'une quelconque des revendications précédentes, **caractérisé en ce que** le composé sensibilisant à la dépolymérisation est présent à une teneur allant de 0,5 % à 5 % en poids de la composition thermoplastique.

13. Procédé de recyclage selon l'une quelconque des revendications précédentes, **caractérisé en ce que** la matrice thermoplastique comporte un polymère thermoplastique présentant un facteur de perte diélectrique inférieur ou égal à 0,1, tel que mesuré à 2450 MHz et 25°C.

14. Procédé de recyclage selon l'une quelconque des revendications précédentes, **caractérisé en ce que** la matrice thermoplastique est une matrice à base de : homo- et copolymères acryliques, poly(méth)acrylates d'alkyles, poly(méthacrylate de méthyle), polycarbonates, polyesters, polystyrène, polyétherimide, polysulfone, poly(sulfure de phénylène), poly(acétate de vinyle), ou d'un mélange de deux ou plusieurs de ces polymères.

15. Procédé de recyclage selon l'une quelconque des revendications précédentes, **caractérisé en ce que** la matrice thermoplastique comporte du poly(méthacrylate de méthyle).

16. Procédé de recyclage selon l'une quelconque des revendications précédentes, **caractérisé en ce que** l'article à recycler comporte plusieurs portions en composés polymères et **en ce qu'**il comporte au moins un composé sensibilisant seulement dans une partie des portions en composés polymère.

17. Procédé de recyclage selon l'une quelconque des revendications précédentes, **caractérisé en ce que** l'article à recycler comporte plusieurs portions en composés polymères et **en ce qu'**il comporte au moins un composé sensibilisant dans la totalité des portions en composés polymère.

18. Procédé de recyclage selon l'une des revendications précédentes 16 ou 17, **caractérisé en ce que** les portions de l'article sont jointes par collage.

## Patentansprüche

1. Verfahren zum Recycling eines Gegenstands, der eine thermoplastische Matrix umfasst, die aus einer thermoplastischen Zusammensetzung gebildet ist, die mindestens eine Verbindung umfasst, die gegenüber der Depolymerisation durch Mikrowellen empfindlich ist, wobei das Verfahren folgende Schritte umfasst:
- Einbringen des Gegenstands in einen Reaktor, und
- Bestrahlen des in den Reaktor eingebrachten Gegenstands mit einer Mikrowellenstrahlung mit einer Frequenz zwischen 10 MHz und 5,8 GHz und vorzugsweise zwischen 900 MHz und 2500 MHz, damit eine Depolymerisation durch Absorption von Mikrowellen durch die Verbindung, die gegenüber Mikrowellen empfindlich ist, ausgelöst wird, sowie ein Umwandeln von zumindest einem Teil des Gegenstands zu mindestens einem Basismonomer der thermoplastischen Matrix.

2. Verfahren zum Recycling nach Anspruch 1, **dadurch gekennzeichnet, dass** es ferner einen Schritt zum Verringern des Gewichts des Gegenstands umfasst.

3. Verfahren zum Recycling nach einem der Ansprüche 1 bis 2, **dadurch gekennzeichnet, dass** so lange mit der Mikrowellenstrahlung bestrahlt wird, bis das Gewicht des Gegenstands um mindestens 10% verringert ist.

4. Verfahren zum Recycling nach einem der Ansprüche 1 bis 3, das einen zuvor stattfindenden Schritt zum Bestrahlen mit einer Mikrowellenstrahlung und zum Messen der Temperatur der Gegenstände umfasst, damit festgestellt wird, ob der Gegenstand ein recycelbarer Gegenstand ist.

5. Verfahren zum Recycling nach einem der vorhergehenden Ansprüche, **dadurch gekennzeichnet, dass** die Verbindung, die gegenüber der Depolymerisation empfindlich ist, einen dielektrischen Verlustfaktor von größer gleich 0,1 bei einer Frequenz zwischen 900 MHz und 2500 MHz und bei 25°C aufweist.

6. Verfahren zum Recycling nach einem der vorhergehenden Ansprüche, **dadurch gekennzeichnet, dass** die Verbindung, die gegenüber der Depolymerisation empfindlich ist, einen dielektrischen Verlustfaktor von größer gleich 5 bei einer Frequenz zwischen 900 MHz und 2500 MHz und bei 25°C aufweist.

7. Verfahren zum Recycling nach einem der vorhergehenden Ansprüche, **dadurch gekennzeichnet, dass** die Verbindung, die gegenüber der Depolymerisation empfindlich ist, einen Tangens des Verlustwinkels von größer gleich 10⁻⁴ bei einer Frequenz zwischen 900 MHz und 2500 MHz und bei 25°C aufweist.

8. Verfahren zum Recycling nach einem der vorhergehenden Ansprüche, **dadurch gekennzeichnet, dass** die Verbindung, die gegenüber der Depolymerisation empfindlich ist, in einem Gehalt von 0,1 Gewichts-% bis 50 Gewichts-% der thermoplastischen Zusammensetzung vorliegt.

9. Verfahren zum Recycling nach einem der vorhergehenden Ansprüche, **dadurch gekennzeichnet, dass** die Verbindung, die gegenüber der Depolymerisation empfindlich ist, ausgewählt wird aus: SiC, TiO₂, ZrO₂, BaTiO₃, SrTiO₃, MgTiO₃, CaTiO₃, LaAlO₃, Ferriten, Basalt, Marmor und ihren Mischungen.

10. Verfahren zum Recycling nach einem der vorhergehenden Ansprüche, **dadurch gekennzeichnet, dass** die Verbindung, die gegenüber der Depolymerisation empfindlich ist, ausgewählt wird aus: Ferriten, Bariumtitanat, Strontiumtitanat, Calciumtitanat, Magnesiumtitanat und ihren Mischungen.

11. Verfahren zum Recycling nach einem der vorhergehenden Ansprüche, **dadurch gekennzeichnet, dass** die Verbindung, die gegenüber der Depolymerisation empfindlich ist, ausgewählt wird aus: SiC, TiO₂, ZrO₂, Marmor und ihren Mischungen.

12. Verfahren zum Recycling nach einem der vorhergehenden Ansprüche, **dadurch gekennzeichnet, dass** die Verbindung, die gegenüber der Depolymerisation empfindlich ist, in einem Gehalt von 0,5 Gewichts-% bis 5 Gewichts-% der thermoplastischen Zusammensetzung vorliegt.

13. Verfahren zum Recycling nach einem der vorhergehenden Ansprüche, **dadurch gekennzeichnet, dass** die thermoplastische Matrix ein thermoplastisches Polymer aufweist, das einen dielektrischen Verlustfaktor von kleiner gleich 0,1 aufweist, gemessen bei 2450 MHz und 25°C.

14. Verfahren zum Recycling nach einem der vorhergehenden Ansprüche, **dadurch gekennzeichnet, dass** die thermoplastische Matrix eine Matrix auf Basis von Folgendem ist: Acryl-Homo- und -Copolymere, Polyalkylmethacrylate, Polymethylmethacrylat, Polycarbonate, Polyester, Polystyrol, Polyetherimid, Polysulfon, Polyphenylensulfid, Polyvinylacetat oder auf Basis einer Mischung aus zwei oder mehr dieser Polymere.

15. Verfahren zum Recycling nach einem der vorhergehenden Ansprüche, **dadurch gekennzeichnet, dass** die thermoplastische Matrix Polymethylmethacrylat aufweist.

16. Verfahren zum Recycling nach einem der vorhergehenden Ansprüche, **dadurch gekennzeichnet, dass** der recycelbare Gegenstand mehrere Abschnitte aus Polymerverbindungen aufweist und dadurch, dass er ausschließlich in einem Teilbereich der Abschnitte aus Polymerverbindungen mindestens eine empfindliche Verbindung aufweist.

17. Verfahren zum Recycling nach einem der vorhergehenden Ansprüche, **dadurch gekennzeichnet, dass** der recycelbare Gegenstand mehrere Abschnitte aus Polymerverbindungen aufweist und dadurch, dass er in sämtlichen Abschnitten aus Polymerverbindungen mindestens eine empfindliche Verbindung aufweist.

18. Verfahren zum Recycling nach einem der vorhergehenden Ansprüche 16 oder 17, **dadurch gekennzeichnet, dass** die Abschnitte des Gegenstands durch Verkleben verbunden sind.

## Claims

1. Method for recycling an article comprising a thermoplastic matrix formed from a thermoplastic composition comprising at least one microwave depolymerization sensitizer compound, said method comprising the following steps:
- placing the article in a reactor, and
- applying, to the article placed in the reactor, microwave radiation at a frequency of between 10 MHz and 5.8 GHz and preferably between 900 MHz and 2500 MHz, so as to initiate depolymerization by microwave absorption by said microwave sensitizer compound, and converting at least part of the article into at least one base monomer of said thermoplastic matrix.

2. Recycling method according to Claim 1, **characterized in that** it further comprises a step of reducing the weight of the article.

3. Recycling method according to any one of Claims 1 to 2, **characterized in that** the microwave radiation is applied until the weight of the article is reduced by at least 10%.

4. Recycling method according to any one of Claims 1 to 3, comprising a prior step of applying microwave radiation and of measuring the temperature of the articles in order to determine if the article is an article to be recycled.

5. Recycling method according to any one of the preceding claims, **characterized in that** the depolymerization sensitizer compound has a dielectric loss factor of greater than or equal to 0.1 at a frequency of between 900 MHz and 2500 MHz and at 25°C.

6. Recycling method according to any one of the preceding claims, **characterized in that** the depolymerization sensitizer compound has a dielectric constant of greater than or equal to 5 at a frequency of between 900 MHz and 2500 MHz and at 25°C.

7. Recycling method according to any one of the preceding claims, **characterized in that** the depolymerization sensitizer compound has a loss tangent of greater than or equal to 10⁻⁴ at a frequency of between 900 MHz and 2500 MHz and at 25°C.

8. Recycling method according to any one of the preceding claims, **characterized in that** the depolymerization sensitizer compound is present in an amount of from 0.1% to 50% by weight of the thermoplastic composition.

9. Recycling method according to any one of the preceding claims, **characterized in that** the depolymerization sensitizer compound is selected from: SiC, TiO₂, ZrO₂, BaTiO₃, SrTiO₃, MgTiO₃, CaTiO₃, LaAlO₃, ferrites, basalt, marble, and mixtures thereof.

10. Recycling method according to any one of the preceding claims, **characterized in that** the depolymerization sensitizer compound is selected from: ferrites, barium titanate, strontium titanate, calcium titanate, magnesium titanate, and mixtures thereof.

11. Recycling method according to any one of the preceding claims, **characterized in that** the depolymerization sensitizer compound is selected from: SiC, TiO₂, ZrO₂, marble, and mixtures thereof.

12. Recycling method according to any one of the preceding claims, **characterized in that** the depolymerization sensitizer compound is present in an amount of from 0.5% to 5% by weight of the thermoplastic composition.

13. Recycling method according to any one of the preceding claims, **characterized in that** the thermoplastic matrix comprises a thermoplastic polymer having a dielectric loss factor of less than or equal to 0.1, as measured at 2450 MHz and 25°C.

14. Recycling method according to any one of the preceding claims, **characterized in that** the thermoplastic matrix is a matrix based on the following: acrylic homo- and copolymers, polyalkyl (meth)acrylates, poly(methyl methacrylate), polycarbonates, polyesters, polystyrene, polyetherimide, polysulfone, poly(phenylene sulfide), poly(vinyl acetate), or a mixture of two or more of these polymers.

15. Recycling method according to any one of the preceding claims, **characterized in that** the thermoplastic matrix comprises poly(methyl methacrylate).

16. Recycling method according to any one of the preceding claims, **characterized in that** the article to be recycled comprises a plurality of portions of polymeric compounds and **in that** it comprises at least one sensitizer compound only in part of the portions of polymeric compounds.

17. Recycling method according to any one of the preceding claims, **characterized in that** the article to be recycled comprises a plurality of portions of polymeric compounds and **in that** it comprises at least one sensitizer compound in the entirety of the portions of polymeric compounds.

18. Recycling method according to one of the preceding Claims 16 or 17, **characterized in that** the portions of the article are joined by gluing.
